# EUROPÄISCHE PATENTSCHRIFT

(11) **EP 2 797 012 B1**
(45) Veröffentlichungstag und Bekanntmachung des Hinweises auf die Patenterteilung: **17.02.2021**
(21) Anmeldenummer: 14164607.5
(22) Anmeldetag: 14.04.2014
(51) Int. Cl.: G06F 16/338, G06F 16/903, G06F 40/205

(54) **Verfahren zur Markierung von vorgebbaren Mustern in einer strukturierten Datenmenge**
Method for marking predetermined patterns in a structured dataset
Procédé de marquage de motifs prévisibles dans une quantité de données structurée

(30) Priorität: 24.04.2013 DE 102013104158
(43) Veröffentlichungstag der Anmeldung: 29.10.2014
(73) Patentinhaber: Gunko, Igor, 64295 Darmstadt (DE)
(72) Erfinder: Gunko, Igor, 64295 Darmstadt (DE)
(74) Vertreter: Habermann Intellectual Property Partnerschaft von Patentanwälten mbB

(56) Entgegenhaltungen:
- JP-A- H04 111 064
- US-A1- 2004 030 681
- US-A1- 2009 248 675

## Beschreibung

Die Erfindung betrifft ein Verfahren zur Markierung von vorgebbaren Mustern in einer strukturierten Datenmenge, die in einer digitalen Datendatei auf einem Speichermedium gespeichert ist, wobei ein Suchmusterkriterium vorgegeben wird, wobei die Daten in mehrere Dateneinheiten unterteilt werden und jede Dateneinheit mit dem Suchmusterkriterium überprüft wird, wobei ein das Suchmusterkriterium erfüllendes Datenmuster markiert wird, und wobei ausgehend von der strukturierten Datenmenge eine Ergebnisdatei erzeugt wird, in der Dateneinheiten-Referenzinformationen gespeichert werden, die auf mit dem Suchmusterkriterium übereinstimmende Dateneinheiten verweisen.

Derartige Verfahren, mit denen vorgebbare Muster in einer strukturierten Datenmenge aufgesucht, markiert und gegebenenfalls zur Anzeige gebracht werden können, sind aus der Praxis in vielfältigen Ausgestaltungen und Verwendungszwecken bekannt. Die meisten Textbearbeitungsprogramme bieten eine Funktion an, mit der ein Suchwort gesucht und auf einer Anzeigeeinrichtung angezeigt werden kann. Um einem Betrachter zusätzliche Informationen zur Verfügung zu stellen, ist es üblich, nicht nur das gefundene Suchwort, sondern auch einen das Suchwort umgebenden Datenmengenbereich anzuzeigen, so dass der Kontext erschlossen werden kann. Eine strukturierte Datenmenge ist entweder nicht verschlüsselt oder in einer Art und Weise verschlüsselt, dass das zu suchende Muster durch die Verschlüsselung nicht aufgeteilt und über die Datenmenge verteilt wurde. Gegebenenfalls muss zunächst eine Entschlüsselung der Datenmenge erfolgen, um nachfolgend auf das zu suchende Muster überprüft zu werden.

Wenn die zu durchsuchende Datenmenge bereits in mehrere Dateneinheiten unterteilt ist, die beispielsweise durch Trennzeichen oder anhand einer fest vorgegebenen Einheitengröße voneinander abgrenzbar sind, kann mit einem geeigneten Suchalgorithmus das Suchmusterkriterium auf die einzelnen Dateneinheiten angewendet werden. Sofern die Datenmenge keine Unterteilung in mehrere Dateneinheiten aufweist, kann ein vorangehender Verfahrensschritt durchgeführt werden, um die die Datenmenge zur nachfolgenden Bearbeitung und für die Anwendung und Überprüfung des Suchmusterkriteriums in geeignete Dateneinheiten zu unterteilen, wobei die Größe der Dateneinheiten beispielsweise an das Suchmusterkriterium angepasst wird.

Die Anforderungen an die Hardware, die zur Durchführung eines derartigen Verfahrens geeignet ist, steigen mit der zunehmenden Größe der strukturierten Datenmenge. Kleine Datenmengen wie beispielsweise Texte in Form von Internet-Seiten oder digitalisierten Büchern können innerhalb kurzer Zeit mit handelsüblichen PCs oder mobilen Datenverarbeitungsgeräten bearbeitet werden.

Es hat sich jedoch gezeigt, dass die Bearbeitung großer Datenmengen wie beispielsweise ein Programmcode-Listing oder eine Protokolldatei einer CAN-Bus-Kommunikation ganz erhebliche Anforderungen an die Hardware stellen, die für die die Durchführung eines eingangs beschriebenen Verfahrens erforderlich sind. Große Datenmengen, die beispielsweise mehrere 100 MB oder mehrere GB Informationen beinhalten, können entweder nicht mehr oder nur mit großem Aufwand an Hardware und Bearbeitungszeit durchsucht und bearbeitet werden. Zudem ist es kaum noch praktikabel, die einzelnen Datenmengenbereiche, die das Suchmusterkriterium erfüllen, sukzessive auf einer Anzeigeeinrichtung anzuzeigen und einer Weiterverarbeitung zuzuführen. Es ist deshalb derzeit kaum möglich, beispielsweise in einem umfangreichen Programmcode-Listing einzelne Befehlsfolgen zu finden oder in einer CAN-Bus-Protokolldatei Fehler zu ermitteln.

In US 2009/248675 A1 wird ein Verfahren mit den eingangs genannten Verfahrensschritten beschrieben. Mehrere Dateneinheiten einer Datenmenge werden nach vorgegebenen Suchmusterkriterien durchsucht. Die gefundenen Suchmuster werden zusammen mit einer Dateneinheiten-Referenzinformation in einer Ergebnisdatei gespeichert, die auf mit dem Suchmusterkriterium übereinstimmende Dateneinheiten verweisen. Die Ergebnisdatei enthält die Suchmuster und jeweils Verweise auf deren Fundstelle in der Datenmenge, sodass mit Hilfe der Ergebnisdatei die einzelnen Fundstellen in der Datenmenge markiert und bei Bedarf in der Datenmenge angezeigt werden können.

Bei großen Datenmengen müssen jedoch sowohl die Datenmenge als auch die Ergebnisdatei gleichzeitig zur Verfügung stehen, um anhand der Informationen aus der Ergebnisdatei die jeweiligen Fundstellen im Kontext in der Datenmenge markieren, anzeigen und auswerten zu können.

Es wird deshalb als eine Aufgabe der vorliegenden Erfindung angesehen, ein Verfahren der eingangs genannten Gattung so auszugestalten, dass die Bearbeitung großer Datenmengen mit einem möglichst geringen Aufwand an Hardware und Bearbeitungszeit ermöglicht wird.

Diese Aufgabe wird erfindungsgemäß durch ein Verfahren mit den Merkmalen des Patentanspruchs 1 gelöst. Die Ergebnisdatei enthält nur noch einen Bruchteil der strukturierten Datenmenge der Datendatei und zudem nur noch Daten, die für die weitere Auswertung relevant sind. In den meisten praxisrelevanten Anwendungsfällen ist die Dateigröße der Ergebnisdatei ganz erheblich kleiner als die Dateigröße der ursprünglich zu bearbeitenden Datendatei. Die Ergebnisdatei kann anschließend in bekannter Art und Weise nach den vorgegebenen Mustern durchsucht, visuell überprüft und weiterverarbeitet werden. Die ursprünglich durchsuchte Datendatei muss für die weitere visuelle Überprüfung und Weiterverarbeitung nicht mehr zur Verfügung stehen.

Durch die Kombination der aus der ursprünglichen Datenmenge extrahierten Dateneinheiten mit Dateneinheiten-Referenzinformationen können für die nachfolgende Auswertung relevante Informationen in die Ergebnisdatei übernommen werden. So kann beispielsweise zu jeder in die Ergebnisdatei übernommenen Dateneinheit deren ursprüngliche Position in der Datendatei abgespeichert werden, um im Verlauf einer nachfolgenden Auswertung der Ergebnisdatei auf die strukturierte Datenmenge und die ursprünglich zu bearbeitende Datendatei rückschließen zu können.

Durch die Verringerung der Dateigröße der Ergebnisdatei im Vergleich zu der ursprünglichen Datendatei können sehr große strukturierte Datenmengen mit ursprünglichen Dateigrößen von mehreren 100 MB oder mehreren GB auf kleine Ergebnisdateien reduziert und mit handelsüblichen PCs in angemessen kurzer Zeit bearbeitet werden.

Erfindungsgemäß ist vorgesehen, dass die Datendatei in mehrere Verarbeitungsblöcke unterteilt wird und für jeden Verarbeitungsblock eine Teilergebnisdatei erzeugt wird, und dass die Teilergebnisdateien zu der Ergebnisdatei zusammengesetzt werden. Die Größe der Verarbeitungsblöcke kann entweder von einem Benutzer vorgegeben oder automatisch ermittelt und festgelegt werden. Die Größe der Verarbeitungsblöcke kann beispielsweise an die durch die Hardware vorgegebenen Beschränkungen oder Empfehlungen angepasst werden. Durch die Unterteilung der Datendatei in mehrere Verarbeitungsblöcke können auch strukturierte Datenmengen mit einer Dateigröße bearbeitet werden, die größer als die von der Hardware zu Verfügung stehenden Speichereinrichtungen oder Bearbeitungseinrichtungen sind. Zudem kann auch bei Dateigrößen der Datendatei, die von der verwendeten Hardware noch bearbeitet werden können, durch die Unterteilung der Datendatei in einzelne Verarbeitungsblöcke die für die Durchführung des Verfahrens erforderliche Bearbeitungsdauer erheblich reduziert werden. Dabei werden mehrere Verarbeitungsblöcke gleichzeitig bearbeitet und anschließend die Teilergebnisdateien zu der Ergebnisdatei zusammengesetzt, wodurch die Bearbeitungsdauer zusätzlich verringert wird.

Es ist vorgesehen, dass das Suchmusterkriterium mehrere Suchmusterbestandteile aufweist und das Suchmusterkriterium erfüllt ist, wenn eine Dateneinheit mindestens einen Suchmusterbestandteil enthält. Ein Suchmusterbestandteil kann beispielsweise ein zu suchender Begriff oder eine zu suchende Bitfolge sein. Durch die Verwendung mehrerer Suchmusterbestandteile in einem Suchmusterkriterium können auch komplexe Abfragen einfach erstellt und rasch durchgeführt werden. Es ist ebenfalls möglich, das Suchmusterkriterium aus mehreren Suchmusterbestandteilen zusammenzusetzen, die durch UND-Verknüpfungen oder ODER-Verknüpfungen oder durch eine Kombination beliebiger Verknüpfungen miteinander kombiniert werden.

Es ist ebenfalls vorgesehen, dass das Suchmusterkriterium mindestens einen Ausschlussmusterbestandteil aufweisen kann und das Suchmusterkriterium nicht erfüllt ist, wenn eine Dateneinheit mindestens einen Ausschlussmusterbestandteil enthält. Auf diese Weise können Inhalte oder Bereiche der strukturierten Datenmenge von der Markierung der vorgebbaren Muster und einer anschließenden Auswertung ausgeschlossen werden.

Einer vorteilhaften Ausgestaltung dieses Erfindungsgedankens zufolge ist vorgesehen, dass das Suchmusterkriterium eine Suchmusterinformation enthält und das Suchmusterkriterium erfüllt ist, wenn ein Vergleich einer Dateneinheit-Referenzinformation mit der Suchmusterinformation einen vorgebbaren Informationsvergleichswert liefert. Die Durchsuchung der strukturierten Datenmenge kann dadurch beispielsweise auf bestimmte räumliche Bereiche wie beispielsweise die ersten 100.000 Dateneinheiten beschränkt werden. Es ist ebenfalls möglich, dass die Dateneinheiten-Referenzinformationen beispielsweise einer Protokolldatei einen Zeitstempel enthalten und durch die Vorgabe einer geeigneten Suchmusterinformation die Bearbeitung der strukturierten Datenmenge auf einen vorgegebenen Zeitbereich beschränkt wird, der für die Auswertung von besonderem Interesse erscheint.

Um gegebenenfalls vermeiden zu können, dass für die Auswertung der strukturierten Datenmenge auf die vollständige Datenmenge, bzw. auf die Datendatei zurückgegriffen werden muss, ist vorgesehen, dass für jede das Suchmusterkriterium erfüllende Dateneinheit in der Datenmenge deren Abstand zu einer benachbarten und ebenfalls das Suchmusterkriterium erfüllenden Dateneinheit ermittelt und die Dateneinheit mit einer Abstandsreferenzinformation in der Ergebnisdatei gespeichert wird. Auf diese Weise können für die Auswertung oftmals wichtige Zusatzinformationen wie beispielsweise eine räumliche oder zeitliche Verteilung bzw. Häufung der gesuchten Muster in der strukturierten Datenmenge in die Ergebnisdatei übernommen werden.

Um die für eine Auswertung der Ergebnisdatei erforderlichen Anforderungen an die Hardware und an die Bearbeitungsdauer zu reduzieren ist vorgesehen, dass bei einer Anzeige der das Suchmusterkriterium erfüllenden Datenmengenbereiche auf einer Anzeigeeinrichtung eine die Abstandsreferenzinformation charakterisierende Markierung angezeigt wird. Diese Markierung kann beispielsweise ein Zahlenwert sein. Es ebenfalls denkbar, dass das zu suchende Muster oder der das Muster beinhaltende Datenmengenbereich, der größer als das zu suchende Muster sein kann, beispielsweise als farbiger Text vor einem neutralen Hintergrund oder als Text in der üblichen Schriftfarbe vor einem mit einer auffallenden Hintergrundfarbe hinterlegten Hintergrund angezeigt wird und der für die farbige Anzeige verwendete Farbton die Abstandsreferenzinformation charakterisiert. Auf diese Weise kann insbesondere bei einer visuellen Inspektion und Durchsicht der Ergebnisdatei rasch und ohne zusätzlichen Auswertungsaufwand feststellt werden, welchen Abstand der aktuell angezeigte Datenmengenbereich mit dem gefundenen Suchmuster zu anderen, ebenfalls gefundenen Suchmustern innerhalb der strukturierten Datenmenge aufweist.

Um möglichst viele verschiedene Ausgangsdaten zuverlässig und effizient durchsuchen und bearbeiten zu können ist vorgesehen, dass ausgehend von der strukturierten Datenmenge eine Arbeitsdatei mit einer vorgebbaren Formatierung der Daten in mehreren Dateneinheiten erzeugt wird und dass aus der Arbeitsdatei die Ergebnisdatei erzeugt wird. Durch die Überführung beliebiger Ausgangsdaten in ein einheitliches Datenformat können die nachfolgenden Verfahrensschritte ohne zusätzliche Modifikationen auf die strukturierte Datenmenge angewendet und durchgeführt werden. Zudem ist es möglich, die Ausgangsdaten in ein Format zu überführen, das für die Durchführung des Verfahrens besonders geeignet ist, und eine rasche Durchführung des Verfahrens begünstigt.

Gegebenenfalls kann es zweckmäßig sein, die strukturierte Datenmenge in mehrere Arbeitsdateien zu zerlegen, wobei die einzelnen Arbeitsdateien bereits Verarbeitungsblöcke darstellen, die unabhängig voneinander durchsucht und in Teilergebnisdateien überführt werden können.

Es ist grundsätzlich möglich und für einige Anwendungen vorteilhaft, wenn das Verfahren nacheinander mehrfach durchgeführt wird und die Ergebnisdatei eines ersten Verfahrensdurchgangs als Ausgangsdatei für einen weiteren Verfahrensdurchgang verwendet wird.

Nachfolgend wird ein Ausführungsbeispiels näher erläutert, das in der Zeichnung dargestellt ist. Es zeigt:
Fig. 1 eine schematische Darstellung der während der Durchführung des Verfahrens verwendeten und gegebenenfalls erzeugten Dateien, und
Fig. 2. ein schematisches Flussdiagramm eines exemplarischen Verfahrensablaufs.

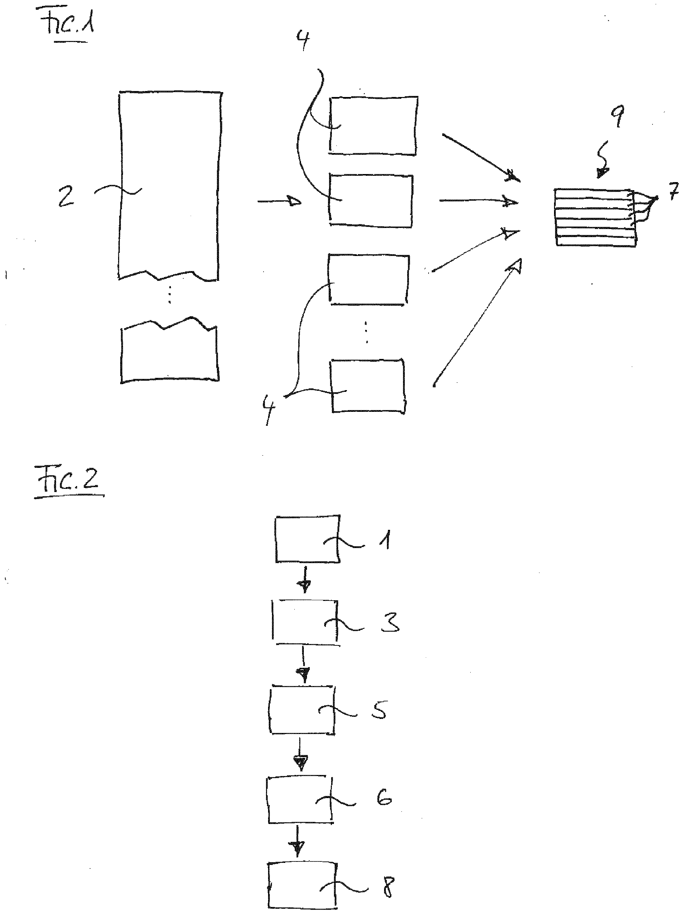

Bei einem in Fig. 2 exemplarisch dargestellten Verfahrensablauf wird in einem ersten Verfahrensschritt 1 eine strukturierte Datenmenge in eine in geeigneter Weise formatierte Datendatei 2 überführt, die in Fig. 1 schematisch gezeigt ist. Die Datendatei 2 enthält beispielsweise 4 GB digitale Dateninformationen. Die Dateninformationen sind in eine große Anzahl kleiner Dateneinheiten gruppiert, die durch Trennzeichen voneinander getrennt sind. Die einzelnen Dateneinheiten stellen jeweils Einträge in einem CAN-Bus-Protokoll dar.

In einem nachfolgenden Verfahrensschritt 3 wird die Datendatei 2 in mehrere Verarbeitungsblöcke 4 unterteilt. Jeder Verarbeitungsblock 4 weist eine Dateigröße auf, die an die verwendete Hardware angepasst und von der Hardware angemessen verarbeitet werden kann. Die Hardware kann beispielsweise ein handelsüblicher PC oder ein mobiler Rechner sein.

Anschließend werden in einem Verfahrensschritt 5 die einzelnen Verarbeitungsblöcke 4 auf ein durch einen Benutzer vorgegebenes Suchmusterkriterium überprüft und alle Dateneinheiten innerhalb eines Verarbeitungsblocks 4 ermittelt, welche das Suchmusterkriterium erfüllen. Das Suchmusterkriterium kann beispielsweise mehrere Begriffe oder Teilbegriffe enthalten, wobei das Suchmusterkriterium bereits dann erfüllt ist, wenn lediglich ein Begriff oder Teilbegriff in der Dateneinheit aufgefunden wird. Das Suchmusterkriterium kann auch Begriffe enthalten, die in der Dateneinheit nicht vorkommen dürfen, um das Suchmusterkriterium zu erfüllen. Ein komplexes Suchmusterkriterium kann mehrere Begriffe enthalten, die entweder allein oder in Verbindung mit weiteren Begriffen in der Dateneinheit enthalten sein müssen oder nicht vorkommen dürfen, um das Suchmusterkriterium zu erfüllen.

Die das Suchmusterkriterium erfüllenden Dateneinheiten eines Verarbeitungsblocks werden in einem weiteren Verfahrensschritt 6 zusammen mit Dateneinheiten-Referenzinformationen in einer Teilergebnisdatei 7 abgespeichert. Die Dateneinheiten-Referenzinformationen beinhalten die Position der Dateneinheiten in der ursprünglichen Datendatei 2 sowie den diesem CAN-Bus-Protokolleintrag zugeordneten Zeitstempel.

In einem Verfahrensschritt 8 werden die Teilergebnisdateien 7 zu einer Ergebnisdatei 9 zusammengesetzt und die Ergebnisdatei 9 auf einer Anzeigeeinrichtung zur Anzeige gebracht. Dabei werden die aufgefundenen Muster markiert und eingebettet in einen umgebenden Datenmengenbereich angezeigt. Ein Betrachter kann durch Eingaben mit einer geeigneten Eingabevorrichtung wie beispielsweise einer Tastatur die Anzeige beeinflussen und zwischen den verschiedenen gefundenen Mustern, bzw. den betreffenden Datenmengenbereichen wechseln.

## Patentansprüche

1. Verfahren zur Markierung von vorgebbaren Mustern in einer strukturierten Datenmenge, die in einer digitalen Datendatei (2) auf einem Speichermedium gespeichert ist, wobei ein Suchmusterkriterium vorgegeben wird, wobei die Daten in mehrere Dateneinheiten unterteilt und jede Dateneinheit der Datenmenge mit dem Suchmusterkriterium überprüft wird, und wobei ein das Suchmusterkriterium erfüllendes Muster markiert wird, und wobei ausgehend von der strukturierten Datenmenge eine Ergebnisdatei (9) erzeugt wird, in der Dateneinheiten-Referenzinformationen gespeichert werden, die auf mit dem Suchmusterkriterium übereinstimmende Dateneinheiten verweisen, **dadurch gekennzeichnet, dass** in der Ergebnisdatei (9) die mit dem Suchmusterkriterium übereinstimmenden Dateneinheiten zusammen mit den Dateneinheiten-Referenzinformationen gespeichert werden, und dass ausgehend von der Ergebnisdatei (9) ein das Suchmusterkriterium erfüllendes Muster markiert wird, indem die Ergebnisdatei (9) auf einer Anzeigeeinrichtung zur Anzeige gebracht wird und dabei die aufgefundenen Muster markiert und eingebettet in einem umgebenden Datenmengenbereich angezeigt werden, und dass die Datendatei (2) in mehrere Verarbeitungsblöcke (4) unterteilt wird, wobei jeder Verarbeitungsblock (4) mehrere Dateneinheiten beinhaltet, und für jeden Verarbeitungsblock (4) eine Teilergebnisdatei (7) erzeugt wird, wobei mehrere Verarbeitungsblöcke (4) gleichzeitig bearbeitet und anschließend die Teilergebnisdateien (7) zur Ergebnisdatei (9) zusammengesetzt werden.

2. Verfahren nach Anspruch 1, **dadurch gekennzeichnet, dass** das Suchmusterkriterium mehrere Suchmusterbestandteile aufweist und das Suchmusterkriterium erfüllt ist, wenn eine Dateneinheit mindestens einen Suchmusterbestandteil enthält.

3. Verfahren nach einem der vorangehenden Ansprüche, **dadurch gekennzeichnet, dass** das Suchmusterkriterium mindestens einen Ausschlussmusterbestandteil aufweist und das Suchmusterkriterium nicht erfüllt ist, wenn eine Dateneinheit mindestens einen Ausschlussmusterbestandteil enthält.

4. Verfahren nach einem der vorangehenden Ansprüche, **dadurch gekennzeichnet, dass** das Suchmusterkriterium eine Suchmusterinformation aufweist und das Suchmusterkriterium erfüllt ist, wenn ein Vergleich einer Dateneinheitsinformation mit der Suchmusterinformation einen vorgegebenen Informationsvergleichswert liefert.

5. Verfahren nach einem der vorangegangenen Ansprüche, **dadurch gekennzeichnet, dass** für jede das Suchmuster erfüllende Dateneinheit in der Datenmenge deren Abstand zu einer benachbarten und ebenfalls das Suchmusterkriterium erfüllende Dateneinheit ermittelt und die Dateneinheit mit einer Abstandsreferenzinformation in der Ergebnisdatei (9) gespeichert wird.

6. Verfahren nach Anspruch 5, **dadurch gekennzeichnet, dass** bei einer Anzeige des das Suchmusterkriterium erfüllenden Musters auf einer Anzeigeeinrichtung eine die Abstandsreferenzinformation charakterisierende Markierung angezeigt wird.

7. Verfahren nach einem der vorgehenden Ansprüche, **dadurch gekennzeichnet, dass** ausgehend von der strukturierten Datenmenge eine Arbeitsdatei mit einer vorgebbaren Formatierung der Daten in mehreren Dateneinheiten erzeugt wird und dass aus der Arbeitsdatei die Ergebnisdatei (9) erzeugt wird.

## Claims

1. Method for marking predeterminable patterns in a structured data set which is stored in a digital data file (2) on a storage medium, in which a search pattern criterion is specified, in which the data is subdivided into a plurality of data units and each data unit of the data set is examined with the search pattern criterion, and in which a pattern that matches the search pattern criterion is marked, and in which a result file (9) is generated from the structured data set, in which result file (9) data unit reference information is stored which refers to data units matching the search pattern criterion, **characterised in that** in the result file (9), the data units matching the search pattern criterion are stored together with the data unit reference information, and **in that**, starting from the result file (9), a pattern that matches the search pattern criterion is marked by displaying the result file (9) on a display device, the patterns found being marked and displayed embedded in a surrounding data set area, and **in that** the data file (2) is subdivided into a plurality of processing blocks (4), each processing block (4) containing a plurality of data units, and a partial result file (7) is generated for each processing block (4), in which case a plurality of processing blocks (4) is processed simultaneously and the partial result files (7) are then combined into the result file (9).

2. Method according to claim 1, **characterised in that** the search pattern criterion has several search pattern components and the search pattern criterion is fulfilled if a data unit contains at least one search pattern component.

3. Method according to one of the preceding claims, **characterised in that** the search pattern criterion has at least one exclusion pattern component and the search pattern criterion is not fulfilled if a data unit contains at least one exclusion pattern component.

4. Method according to one of the preceding claims, **characterised in that** the search pattern criterion has a search pattern information item and the search pattern criterion is fulfilled if a comparison between a data unit information item and the search pattern information item delivers a predetermined information comparison value.

5. Method according to one of the preceding claims, **characterised in that** for each data unit in the data set that matches the search pattern, its distance from an adjacent data unit that also matches the search pattern criterion is determined and the data unit is stored with a distance reference information item in the result file (9).

6. Method according to claim 5, **characterised in that** when the pattern that matches the search pattern criterion is displayed on a display device, a mark characterising the distance reference information is displayed.

7. Method according to one of the preceding claims, **characterised in that**, starting from the structured data set, a work file with a predeterminable formatting of the data in a plurality of data units is generated, and **in that** the result file (9) is generated from the work file.

## Revendications

1. Procédé de marquage d'un schéma prédéfinissable dans un volume de données structuré, enregistré dans un fichier de données numérique (2) sur un support de stockage, sachant qu'un critère de schéma de recherche est prédéfini, sachant que les données sont subdivisées en plusieurs unités de données et que chaque unité de données du volume de données est contrôlée à l'aide du critère de schéma de recherche, sachant qu'un schéma répondant au critère de schéma de recherche est marqué, et sachant qu'un fichier de résultat (9), dans lequel sont enregistrées les informations de référence d'unité de données qui renvoient aux unités de données correspondant au critère de schéma de recherche, est généré à partir du volume de données structuré, **caractérisé en ce que** les unités de données correspondant au critère de schéma de recherche contenues dans le fichier de résultat (9) sont enregistrées avec les informations de référence d'unité de données, **en ce qu'**un schéma répondant au critère de schéma de recherche est marqué à partir du fichier de résultat (9) via l'affichage du fichier de résultat (9) sur un dispositif d'affichage et que le schéma trouvé est marqué et affiché intégré dans un environnement de volume de données, et **en ce que** le fichier de données (2) est subdivisé en plusieurs blocs de traitement (4), sachant que chaque bloc de traitement (4) contient plusieurs unités de données et qu'un fichier de résultat partiel (7) est généré pour chaque bloc de traitement (4), sachant que plusieurs blocs de traitement (4) sont édités en même temps et que les fichiers de résultat partiel (7) sont ensuite compilés ensemble pour former le fichier de résultat (9).

2. Procédé selon la revendication 1, **caractérisé en ce que** le critère de schéma de recherche présente plusieurs composants de schéma de recherche et que le critère de schéma de recherche est rempli quand l'unité de données contient au moins un composant de schéma de recherche.

3. Procédé selon l'une quelconque des revendications précédentes, **caractérisé en ce que** le critère de schéma de recherche présente au moins un composant de schéma de recherche final et que le critère de schéma de recherche n'est pas rempli quand l'unité de données contient au moins un composant de schéma de recherche final.

4. Procédé selon l'une quelconque des revendications précédentes, **caractérisé en ce que** le critère de schéma de recherche présente au moins une information de schéma de recherche et que le critère de schéma de recherche est rempli quand une comparaison entre une information de l'unité de données et l'information de schéma de recherche renvoie une valeur prédéfinie de comparaison d'information.

5. Procédé selon l'une quelconque des revendications précédentes, **caractérisé en ce que** l'écart entre chaque unité de données remplissant le schéma de recherche au sein du volume de données et l'unité de données voisine remplissant également le critère de schéma de recherche est calculé et **en ce que** l'unité de données est enregistrée dans le fichier de résultat (9) avec une information de référence d'écart.

6. Procédé selon la revendication 5, **caractérisé en ce que**, lors de l'affichage du schéma remplissant le critère de schéma de recherche sur un dispositif d'affichage, un marquage caractérisant l'information de référence d'écart est affiché.

7. Procédé selon l'une quelconque des revendications précédentes, **caractérisé en ce qu'**un fichier de travail avec une mise en forme prédéfinissable des données en plusieurs unités de données est généré à partir du volume de données structuré et **en ce que** le fichier de résultat (9) est généré à partir du fichier de travail.
